# EUROPÄISCHE PATENTSCHRIFT

(11) **EP 0 925 630 B1**
(45) Veröffentlichungstag und Bekanntmachung des Hinweises auf die Patenterteilung: **18.02.2004**
(21) Anmeldenummer: 98931936.3
(22) Anmeldetag: 17.04.1998
(51) Int. Cl.: H02K 5/167, F16C 33/08, F16C 33/12

(54) **ELEKTROMOTOR MIT EINEM DREHANKER**
ELECTRICAL MOTOR WITH A ROTATING ARMATURE
MOTEUR ELECTRIQUE COMPORTANT UN INDUIT ROTATIF

(30) Priorität: 20.06.1997 DE 19726200
(43) Veröffentlichungstag der Anmeldung: 30.06.1999
(73) Patentinhaber: ROBERT BOSCH GMBH, 70442 Stuttgart (DE)
(72) Erfinder: RUPP, Bernhard, D-75056 Sulzfeld (DE); KNÖPFEL, Gerd, D-77815 Bühl (DE)
(86) Internationale Anmeldenummer: PCT/DE1998/001078
(87) Internationale Veröffentlichungsnummer: WO 1998/059403

(56) Entgegenhaltungen:
- EP-A- 0 381 499
- DE-A- 2 411 907
- DE-A- 4 210 935
- DE-A- 19 525 558
- FR-A- 2 220 023

## Beschreibung

### Stand der Technik

Die Erfindung geht aus von einem Elektromotor nach der Gattung des Hauptanspruches.

Durch die Druckschrift US 5,237,231 ist ein Elektromotor mit einem Drehanker und mit einem Kollektor und mit einer Ankerwelle bekannt, wobei die Ankerwelle gelagert ist mittels zwei Gleitlagern, zwischen denen sich der Drehanker und der Kollektor befinden. Die Gleitlager enthalten Gleitlagerbuchsen, die außen kugelige Flächen und von den kugeligen Flächen im wesentlichen radial einwärts ausgehende Ausnehmungen aufweisen, und die Gleitlagerbuchsen schwenkbeweglich aufnehmende, aus Blech geformte Lagerpfannen, von denen Zungen ausgehen, die in die Ausnehmungen der schwenkbeweglichen Gleitlagerbuchsen greifen und die Gleitlagerbuchsen gegen Verdrehung sichern. Erkennbar ist, daß die Gleitlager nur dann zusammenbaubar sind, wenn die Ausnehmungen in eine geeignete Drehausrichtung zu den Zungen gebracht sind. Dies macht eine manuelle Montage teuer bzw. erschwert eine maschinelle Montage.

Durch die Druckschriften EP 0 164 827 A3, DE 38 21 557 C1 und DE 38 23 477 A1 sind Elektromotoren bekannt, deren Drehanker einseitig mittels Ankerwellen und Gleitlagerbuchsen gelagert sind. Diese Gleitlagerbuchsen sichern die Ankerwellen und damit die Drehanker gegen Kippung und sind außen zylindrisch ausgebildet und üblicherweise durch per Einpressen erzeugten Reibschlüsse innerhalb von zylindrischen Aufnahmebohrungen von ruhenden oder elastisch aufgehängten Bauteilen wenigstens gegen Verdrehung gesichert. Häufig sind solche Gleitlagerbuchsen aus Stahlpulver gepreßt und gesintert. Die ruhenden oder elastisch aufgehängten Bauteile sind beispielsweise aus Aluminium, Magnesium oder Zink hergestellt und weisen im Betrieb des jeweiligen Elektromotors infolge von Erwärmung im wesentlichen doppelt so große Ausdehnungen auf als die vorzugsweise aus Stahlpulver hergestellten Gleitlagerbuchsen. Diese unterschiedlichen Ausdehnungen führen zur Verminderung von Reibschlußkräften zwischen den Gleitlagerbuchsen und den sie aufnehmenden Bauteilen. Deshalb kann insbesondere dann, wenn die Temperaturen der Gleitlagerbuchsen stark ansteigen sollten, die Gefahr bestehen, daß die Ankerwellen die Gleitlagerbuchsen verdrehen. Die Verminderung der Reibschlußkräfte ist auch von Nachteil, wenn die Gleitlagerbuchsen nicht durch konstruktive Maßnahmen gegen axiale Verschiebung gesichert sind. Ein bekanntes konstruktives Mittel ist das Anordnen eines radialen Bundes an der Gleitlagerbuchse.

Durch die Druckschrift DE 24 11 907 A ist ein Elektromotor bekannt mit einem Drehanker, mit einer Ankerwelle, mit einem Paar von Gleitlagerbuchsen, in denen die Ankerwelle gelagert ist, und mit einem verdrehsicher angeordneten Bauteil, das eine Aufnahmebohrung aufweist, in die die Gleitlagerbuchsen eingebaut sind, wobei die Gleitlagerbuchsen auf jeweils ihrer gesamten Länge ein nach Art eines Rändels ausgebildetes Profil aufweisen, wobei der Durchmesser der Aufnahmebohrung im aufnehmenden Bauteil kleiner ist als ein äußerer Hüllkreisdurchmesser des Profils und wobei der Werkstoff des die Aufnahmebohrung aufweisenden Bauteils weicher ist als der Werkstoff der Gleitlagerbuchse. Beim Einpressen in die Aufnahmebohrung graben sich die Profile in den Werkstoff des aufnehmenden Bauteils ein mit dem Vorteil, daß radiale Einschnürungen der Gleitlagerbuchsen während des Einpressens weitgehend vermieden werden und dieserart die Gleitlagerbuchsen im Inneren keine nennenswerte Verengung erfahren. Vorteilhaft ist hierbei auch, wenn die Gleitlagerbuchsen aus Sintermetall bestehen, daß die porösen inneren Merkmale der Gleitlagerbuchsen auch beim Einpressen die gleichen bleiben, was sich vorteilhaft hinsichtlich der Selbstschmierung auswirkt. Als nachteilig kann angesehen werden, daß die Gleitlagerbuchsen und die diese aufnehmenden Bauteile nicht immer mit denselben Härten angeliefert werden und deshalb radiale Zusammenpressungen der Gleitlagerbuchsen beim Einpressen störend unterschiedlich ausfallen können.

### Vorteile der Erfindung

Der erfindungsgemäße Elektromotor mit den kennzeichnenden Merkmalen des Anspruchs 1 hat nebst einer Sicherung gegen Verdrehen der Gleitlagerbuchse durch Formschluß in einer preisgünstigen Weise durch Einpressen des profilierten Bereichs der Gleitlagerbuchse in die zunächst zylindrische Aufnahmebohrung des aufnehmenden Bauteiles noch die Vorteile, dass eine Einschnürung der Lagerbuchse auf einen Bereich zwischen zwei Gleitlagerflächen beschränkt wird und demzufolge einer unerwünschen Durchmesserverengung der Gleitlagerflächen besser entgegengewirkt wird und dass Fluchtungsfehler der beiden Gleitlagerflächen, weil sie in einem Bauteil zusammengefaßt sind, weitgehend vermieden werden. Dabei ist die Gleitlagerbuchse vor dem Einpressen leicht in den Anfang der Aufnahmebohrung einführbar und es ist dabei gleichgültig, welches der beiden Enden der Gleitlagerbuchse in die Aufnahmebohrung vor dem Einpreßvorgang eingeführt wird. Insofern wird die Montage begünstigt und eine teure Wendeeinrichtung, mittels.der.. fallsweise eine solche Gleitlagerbuchse um 180° zu wenden wäre, vermieden.

Die kennzeichnenden Merkmale des Anspruchs 2 ergeben den Vorteil, daß eine nur auf einem Teil ihrer Länge profilierte Aufnahmebohrung einen gegen eine Stirnseite des Profils wirkenden Axialanschlag bildet und dieserart in preisgünstiger Weise die Gleitlagerbuchse in einer Richtung axial fixiert.

Die kennzeichnenden Merkmale des Anspruchs 3 ergeben den Vorteil, daß in preisgünstiger Weise ein zweiter Axialanschlag für die Gleitlagerbuchse zustandekommt lediglich durch Verformen des Werkstoffs des die Gleitlagerbuchse aufnehmenden Bauteils.

Die kennzeichnenden Merkmale des Anspruchs 4 ergeben den Vorteil, daß der Längenabschnitt, den das Profil einnimmt, als ein zusätzlicher Schmierstoff Speicher dient.

### Zeichnung

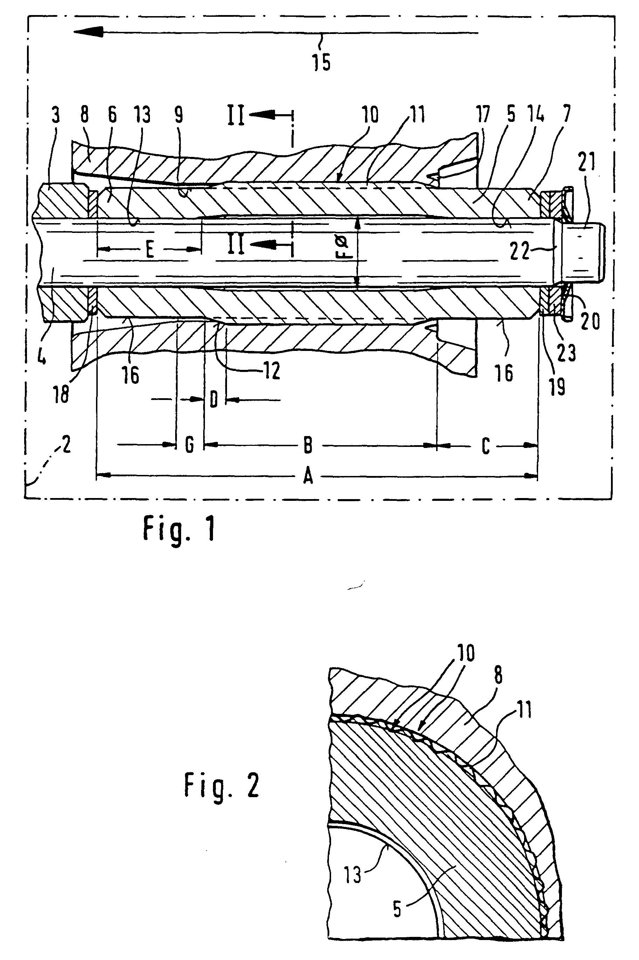

Ein Ausführungsbeispiel des erfindungsgemäßen Elektromotors ist in der Zeichnung dargestellt und nachfolgend näher beschrieben. Es zeigen Figur 1 einen Ausschnitt aus dem erfindungsgemäßen Elektromotor im Längsschnitt und Figur 2 einen Querschnitt im vergrößerten Maßstab, der dem Längsschnitt gemäß der Figur 1 zugeordnet ist.

### Beschreibung des Ausführungsbeispiels

Der in der Figur 1 teilweise dargestellte erfindungsgemäße Elektromotor 2 hat einen teilweise dargestellten Drehanker 3, eine Ankerwelle 4, eine Gleitlagerbuchse 5 mit einem ersten Ende bzw. Anfang 6 und einem zweiten Ende 7 und ein Bauteil 8 mit einer Aufnahmebohrung 9. Des weiteren weist der Elektromotor 2 weitere Bauelemente auf, auf die es hier im Rahmen der Erfindung nicht ankommt, wobei diese Bauteile beispielsweise aus dem umfangreichen Stand der Technik auswählbar sind.

Die Gleitlagerbuchse 5 weist über ihre beiden Enden 6 und 7 gemessen eine Länge A auf. Ein Längenabschnitt B der Gleitlagerbuchse 5 weist am Umfang ein Profil 10 auf, das nach Art eines Rändels ausgebildet ist und also aus einer Anzahl von am Umfang verteilten und dabei achsparallel zur Gleitlagerbuchse 5 ausgerichteten Rippen 11 besteht. Dabei ist es dem Fertigungsfachmann freigestellt, nach welchem Verfahren er diese Rippen 11 bzw. das gesamte Profil 10 herstellt. Durch Wahl eines Abstandes C beispielsweise vom zweiten Ende 7 kann eine symmetrische Ausrichtung des Profils 10 zwischen den beiden Enden 6 und 7 erreicht werden. Beispielsweise hat das Profil 10 beidendig kegelige Anschnitte von der Länge D. Des weiteren weist die Gleitlagerbuchse 5 innen zwei zylindrische Gleitlagerflächen 13 und 14 auf mit einem Durchmesser, der dem Nenndurchmesser der Ankerwelle 4 zugeordnet ist. Hierbei wählt der Fachmann für Lagerungen ein Lagerspiel zwischen der Ankerwelle 4 und den zylindrischen Gleitflächen 13 und 14 aus.

In zur Erfindung gehörender Weise weisen die zylindrischen Gleitlagerflächen in Längsrichtung der Gleitlagerbuchse 5 Längen E auf, die vorzugsweise kürzer sind als das Maß C. Zwischen den zylindrischen Gleitlagerflächen 13 und 14 weist die Gleitlagerbuchse 5 einen Durchmesser F auf, der bei der Herstellung der Gleitlagerbuchse 5 um ein Mindestmaß größer gewählt wird als der Durchmesser der zylindrischen Gleitlagerflächen 13 und 14.

Das Profil 10 mit seinen Rippen 11 ist in der Figur 2, die einen Querschnitt durch die Gleitlagerbuchse 5 darstellt, vergrößert dargestellt. Erkennbar ist, daß man sich um die Rippen 11 gelegt einen Hüllkreis denken kann mit einem bestimmten Nenndurchmesser. In der Figur 2 ist auch dargestellt, daß Höhenabschnitte der Rippen 11 eingebettet sind in das äußere Bauteil 8. Diese Einbettung kommt beim Einpressen der Gleitlagerbuchse 5 in der in der Figur 1 dargestellten Richtung des Pfeiles 15 zustande. Hierfür weist der Werkstoff der Gleitlagerbuchse 5 eine höhere Festigkeit auf als der Werkstoff des umgebenden Bauteiles 8. Dies ist beispielsweise der Fall, wenn die Gleitlagerbuchse 5 als ein aus Stahlpulver gesintertes Bauteil ausgebildet wird und das äußere Bauteil 8 wahlweise beispielsweise aus Aluminium oder Magnesium im Druckgußverfahren hergestellt ist. Wie in der Figur 2 des weiteren zu erkennen ist, ist der Durchmesser der Aufnahmebohrung 9 zum genannten Hüllkreis um die Rippen 11 so abgestimmt, daß Lücken zwischen den Rippen 11 vom Werkstoff des umgebenden Bauteils 8 nur teilweise ausgefüllt werden. Jedenfalls wird Sorge dafür getragen, daß außerhalb des Längenabschnittes B, den das Profil 10 einnimmt, die Gleitlagerbuchse 5 Durchmesser 16 aufweist, von denen einer in der Figur 1 erkennbar ist und im Schnittbild gemäß der Figur 2 als ein gestrichelter Kreis abgebildet ist hinter dem Profil 10 und dabei erkennbar radial innerhalb eines Hüllkreises, an den die tiefsten Zonen von Lücken zwischen den Rippen angrenzen.

Im Beispiel gemäß der Figur 1 weist die Aufnahmebohrung 9 eine Länge auf, die der Summe aus der Abmessung B des Profils 10 und einem weiteren Maß G entspricht. Demgemäß ist ein Längenabschnitt mit dem Maß G der Aufnahmebohrung 9 frei von den beschriebenen Vertiefungen, die durch die Rippen 11 des Profils 10 beim Einpressen erzeugt werden. Erkennbar ist also, daß im Bereich des Anschnittes D Werkstoff des umgebenden Bauteiles 8 einen Anschlag für die Gleitlagerbuchse 5 bildet, so daß diese bei einer im Betrieb stattfindenden axialen Belastung in Richtung der Einpreßrichtung 15 lagegesichert ist, ohne daß ein zusätzliches Bauelement wie eine Drahtringsicherung oder dergleichen benötigt wird.

In ebenfalls zur Erfindung gehörender Weise ist für einen in der entgegengesetzten Richtung wirkenden Anschlag gesorgt dadurch, daß durch Eindrücken von wenigstens einer V-förmigen Kerbe 17 Werkstoff des umgebenden Bauteiles 8 im wesentlichen in radialer Richtung verdrängt wird gegen wenigstens das Profil 10. Wie bereits angedeutet, kann wenigstens eine Kerbe 17 vorgesehen sein oder aber es kann eine umlaufende Kerbe vorgesehen sein, die ringartig geschlossen ist und herstellbar ist mittels eines im wesentlichen rohrartigen Werkzeuges, das in eine Art Ringschneide ausläuft.

Der Drehanker 3 kann in an sich beliebiger Weise auf der Ankerwelle 4 befestigt sein. Beispielsweise kann zwischen dem Drehanker 3 und dem Anfang 6 der Gleitlagerbuchse 5 eine gehärtete Ringscheibe 18 angeordnet sein. Dadurch ist im Kontakt mit dem Ende 6 die Gleitlagerbuchse 5 als ein Axialgleitlager nutzbar. In gleichartiger Weise kann beim Ende 7 ebenfalls eine Ringscheibe 19 vorgesehen sein, die die Ankerwelle 4 umgibt und gegen Abgleiten von der Ankerwelle 4 mittels eines Krallenringes 20 gesichert ist. Der Krallenring verkrallt sich beispielsweise mit einem Endabschnitt 21, der einen kleineren Durchmesser als die Ankerwelle 4 und vorzugsweise auch einen weicheren Zustand als die Ankerwelle 4 hat, die zum Zwecke der Verschleißminderung beispielsweise eine gehärtete Oberfläche aufweist. Die von dem Krallenring 20 axial gesicherte Ringscheibe 19 und das Ende 7 der Gleitlagerbuchse 5 bilden ein zweites axiales Gleitlager. Im Bereich eines Überganges 22 vom Durchmesser der Ankerwelle 4 zum demgegenüber kleineren Durchmesser des Endabschnittes 21 kann ein Distanzring 23 angeordnet sein. Dieser Distanzring 23 ermöglicht es, die Ringscheibe 19 beispielsweise aus federhartem Blech auszustanzen.

Erkennbar ist, daß das Profil 10 dank seiner Rippen 11 eine Verdrehsicherung der formschlüssigen Art relativ zu dem umgebenden Bauteil 8 bildet für solche Momente, die durch Lagerreibung der drehenden Ankerwelle 4 entlang dem zylindrischen Gleitlagerflächen 13 und 14 entstehen. Erkennbar ist auch, daß die über die Ringscheiben 18 und 19 auf die Gleitlagerbuchse 5 übertragbaren Längskräfte einerseits angrenzend an den unverformt gebliebenen Längenabschnitt G der Aufnahmebohrung 9 und andererseits durch eine durch Anbringung der Kerben 17 erzeugte Verstemmung aufgefangen werden.

Wie bereits am Anfang der Beispielsbeschreibung aufgeführt, wurde auf weitere konstruktive Einzelheiten des Elektromotors verzichtet. Ergänzend wird nur darauf hingewiesen, daß beispielsweise anschließend an den nur teilweise dargestellten Drehanker ein Lüfterrad angebaut sein kann. Je nach Größe des Lüfterrades kann dieses beispielsweise ein Lüftergebläse für einen Fahrgastraum eines Kraftfahrzeuges sein oder aber es kann dies ein Gebläserad sein, das, wie in der Druckschrift DE 38 23 447 A1 offenbart ist, einen Luftstrom erzeugt zur Übertragung der Temperatur des Luftstromes auf einen Temperatursensor, der ein Bestandteil einer Temperaturregeleinrichtung ist. Diese Temperaturregeleinrichtung kann ihrerseits wieder Bestandteil beispielsweise einer Klimaanlage eines Kraftfahrzeuges sein.

In den beiden beschriebenen Anwendungsbeispielen wird die Gleitlagerbuchse 5 unterschiedliche Abmessungen haben. Jedenfalls werden zumeist die Abmessungen kleiner sein als dies in der Figur 1 dargestellt ist. Die Figur 1 und insbesondere die Figur 2 stellen also wesentliche Vergrößerungen dar, anhand von denen die erfindungsgemäßen Merkmale ausreichend deutlich erkennbar sind.

## Patentansprüche

1. Elektromotor (2) mit einem Drehanker (3), mit einer Ankerwelle (4), mit wenigstens einer Gleitlagerbuchse (13, 14), in der die Ankerwelle (4) gelagert ist und mit einem verdrehsicher angeordneten Bauteil (8), das eine Aufnahmebohrung (9) aufweist, in die die Gleitlagerbuchse (5) eingepresst ist, wobei die Gleitlagerbuchse (5) außen wenigsten auf einem Teil (B) ihrer Länge (A) ein nach Art eines Rändels ausgebildetes Profil (10, 11) aufweist und der Durchmesser der Aufnahmebohrung (9) im aufnehmendem Bauteil (8) kleiner ist als ein größerer Hüllkreisdurchmesser des Profils (10, 11) und der Werkstoff des die Aufnahmebohrung (9) aufweisenden Bauteils (8) weicher ist als der Werkstoff der Gleitlagerbuchse (5), **dadurch gekennzeichnet, daß** die das Profil (10, 11) aufweisende Teillänge (B) der Gleitlagerbuchse (5) von Enden (6, 7) der Gleitlagerbuchse (5) gleiche Abstände (C) hat, und daß die Gleitlagerbuchse (5) wenigstens entlang der Teillänge (B) des Profils (10, 11) innen einen größeren Durchmesser (F) aufweist als bei ihren Enden (6, 7), in denen sich zylindrische Gleitlagerflächen (13, 14) befinden.

2. Elektromotor nach Anspruch 1, **dadurch gekennzeichnet, daß** eine Länge (B + G) der Aufnahmebohrung (9) größer ist als die Länge (B) des Profils (10, 11).

3. Elektromotor nach Anspruch 2, **dadurch gekennzeichnet, daß** Werkstoff des umgebenden Bauteils (8) bei einem Anfang (17) der Aufnahmebohrung (9) gegen das Profil (10, 11) gestemmt ist.

4. Elektromotor nach Anspruch 1, **dadurch gekennzeichnet, daß** die Gleitlagerbuchse (5) als ein Sinterteil ausgebildet und mit Schmiermittel getränkt ist.

## Claims

1. Electric motor (2) having a rotating armature (3), having an armature shaft (4), having at least one journal bearing bush (13, 14) in which the armature shaft (4) is borne, and having a component (8) which is arranged such that it cannot rotate and has a retaining hole (9) into which the journal bearing bush (5) is pushed, with the journal bearing bush (5) externally having a profile (10, 11), which is in the form of knurling located at least on a part (B) of its length (A), and the diameter of the retaining hole (9) in the holding component (8) being smaller than a larger envelope circle diameter of the profile (10, 11), and the material of the component (8) which has the retaining hole (9) being softer than the material of the journal bearing bush (5), **characterized in that** that part of the length (B) of the journal bearing bush (5) which has the profile (10, 11) is at the same distance (C) from each of the ends (6, 7) of the journal bearing bush (5), and **in that** the journal bearing bush (5) internally has a larger diameter (F), at least along that part of the length (B) of the profile (10, 11), than at its ends (6, 7) in which cylindrical journal bearing surfaces (13, 14) are located.

2. Electric motor according to Claim 1, **characterized in that** the length (B + G) of the retaining hole (9) is greater than the length (B) of the profile (10, 11).

3. Electric motor according to Claim 2, **characterized in that** the material of the surrounding component (8) is peened against the profile (10, 11) at the start (17) of the retaining hole (9).

4. Electric motor according to Claim 1, **characterized in that** the journal bearing bush (5) is in the form of a sintered part, and is impregnated with lubricant.

## Revendications

1. Moteur électrique (2) comprenant un induit rotatif (3), un arbre d'induit (4), au moins une douille de palier lisse (13, 14) sur laquelle est fixé l'arbre d'induit (4), et un élément (8) fixe en rotation qui présente un alésage de réception (9) dans lequel est serrée la douille de palier lisse (5), la douille de palier lisse (5) présentant à l'extérieur au moins sur une partie (B) de sa longueur (A) un profilé (10, 11) de type moletage et le diamètre de l'alésage de réception (9) dans l'élément (8) étant inférieur à un diamètre circulaire d'enveloppe plus grand du profilé (10, 11), alors que le matériau de l'élément (8) présentant l'alésage de réception (9) est plus souple que le matériau de la douille de palier lisse (5),
**caractérisé en ce que**
la longueur partielle (B) de la douille de palier lisse (5) présentant le profilé (10, 11) a les mêmes distances (C) des extrémités (6,7) de la douille de palier lisse (5),
et la douille de palier lisse (5) présente à l'intérieur au moins le long de la longueur partielle (B) du profilé (10, 11) un diamètre (F) supérieur à ses extrémités (6, 7) dans lesquelles se trouvent des surfaces de palier lisse cylindriques (13, 14).

2. Moteur électrique selon la revendication 1,
**caractérisé en ce qu'**
une longueur (B + G) de l'alésage de réception (9) est supérieure à la longueur (B) du profilé (10, 11).

3. Moteur électrique selon la revendication 2,
**caractérisé en ce que**
le matériau de l'élément entourant (8) s'appuie contre le profilé (10, 11) lors d'une entrée (17) de l'alésage de réception (9).

4. Moteur électrique selon la revendication 1,
**caractérisé en ce que**
la douille de palier lisse (5) est une pièce frittée et huilée avec un lubrifiant.
